(19) Europäisches Patentamt
European Patent Office
Office européen des brevets

(11) Numéro de publication: **0 240 439 B1**

(12) **FASCICULE DE BREVET EUROPEEN**

(45) Date de publication du fascicule du brevet: **01.08.90**

(51) Int. Cl.$^5$: **C 08 C 19/30**, C 08 C 19/20

(21) Numéro de dépôt: **87420065.2**

(22) Date de dépôt: **04.03.87**

(54) **Oligomères à séquences polydiéniques et à greffons photoréticulables et leurs applications notamment dans le revêtement des métaux.**

(30) Priorité: **05.03.86 FR 8603617**

(43) Date de publication de la demande:
**07.10.87 Bulletin 87/41**

(45) Mention de la délivrance du brevet:
**01.08.90 Bulletin 90/31**

(84) Etats contractants désignés:
**AT BE CH DE ES FR GB GR IT LI LU NL SE**

(56) Documents cités:
**FR-A-2 096 021**

**DIE MAKROMOLEKULARE CHEMIE, vol. 182, no. 5, mai 1981, pages 1415-1428, Heidelberg, DE; J.G. DE LA CAMPA et al.: "Polybutadiènes hydroxytéléchéliques, addition des thiols sur les double liaisons des polybutadiènes hydroxytéléchéliques radicalaire et anionique. Etude des mécanismes d'addition par 1H et 13C NMR"**

(73) Titulaire: **ATOCHEM**
**4 & 8, Cours Michelet La Défense 10**
**F-92800 Puteaux (FR)**

(72) Inventeur: **Boutevin, Bernard**
**1 rue A. Mathieu**
**F-34000 Montpellier (FR)**
Inventeur: **Fleury, Etienne**
**124 rue M. Chauvet**
**F-34000 Montpellier (FR)**
Inventeur: **Parisi, Jean-Pierre**
**Les Pastourelles Rue de Salaison**
**F-34000 Montpellier (FR)**

(74) Mandataire: **Maureau, Philippe et al**
**Cabinet Germain & Maureau Le Britannia - Tour C 20, bld Eugène Déruelle**
**F-69003 Lyon (FR)**

**EP 0 240 439 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

L'invention concerne des oligomères à séquences polydiéniques et à greffons photoréticulables et leurs applications notamment dans le revêtement des métaux.

Parmi les nombreux oligomères photoréticulables, les époxy acryliques et les uréthanes acryliques sont actuellement les plus utilisés.

Plus récemment, des télomères acryliques obtenus soit par catalyse redox (FR—A—81 14 799), soit par amorçage radicalaire (FR—A—83 06 066) ont été proposés. Dans tous les cas, ces oligomères sont utilisés en mélange avec un monomère diluant réactif acrylique, soit en présence de photoinitiateurs dans le cas de réticulation UV, soit directement lorsqu'on utilise les électrons.

Les temps de durcissement sont très faibles, de l'ordre de la seconde. Ceci implique une fonctionnalité en groupements acryliques élevée, ce qui a pour conséquence une forte densité de noeuds de réticulation se manifestant par des retraits et contraintes importants, un manque d'adhérence et de souplesse, ces phénomènes étant vraisemblablement liés.

Plusieurs solutions ont été proposées, notamment par l'introduction de séquences souples séparant les groupements acryliques. Dans le cas des silicones diacrylates, c'est la séquence silicone qui apporte la souplesse, et dans le cas des polybutadiènes diacrylates, c'est la séquence butadiénique qui remplit ce rôle. Il s'agit alors de polybutadiènes téléchéliques diols, à chaîne polybutadiènique souple, le greffage des acryliques s'effectuant sur les extrémités diols.

D'autres solutions proposées consistent à introduire des groupements favorisant l'adhérence sur certains supports: cellulose greffée acrylique et promoteurs d'adhérence type esters phosphoriques acryliques.

La présente invention s'est donné pour but de proposer de nouveaux types d'obligomères photoréticulables combinant des propriétés de souplesse, d'adhesion et de vitesse de réticulation.

Ces nouveaux types d'oligomères photoréticulables contiennent une séquence polydiènique de 1 à 100 maillons isoprène, butadiène, chloroprène, des groupements fonctionnels polaires tels que les groupements acides ou alcools, au nombre de 1 à 20, les groupements acryliques ou méthacryliques au nombre de 1 à 20, les trois types de groupements étant liés par des liaisons covalentes.

La formula générale des composés selon l'invention est la suivante:

$$A\left[-(Xi)_x-(Yi)_y-\underset{\underset{\displaystyle Ri}{|}}{(Yi)_z}-\underset{\underset{\underset{\displaystyle Q}{|}}{\displaystyle Ri}}{(Yi)_t}-(Zi)_u-\right]A \qquad (I)$$

dans laquelle:

Xi représente un monoméne diènique polymérisé suivant un enchaînement 1—4, cis ou trans, tel que l'isoprène, le butadiène ou le chloroprène;

Yi représente un monoméne diènique polymérisé suivant un enchaînement 1—2 ou 3—4, tel que l'isoprène, le butadiène ou le chloroprène;

Zi représente un monomère polymérisable non diènique, acrylique, vinylique ou allylique;

Ri représente un groupement thiol additionné sur la double liaison non polymérisée du diène Yi et possédant en outre, sur sa chaîne, un ou plusieurs groupements sur lesquels on peut greffer des acryliques ou méthacryliques Q;

Q représente un dérivé acrylique ou méthacrylique, acide ou ester, comportant une fonction complémentaire à celle du groupement Ri, afin d'effecteur le greffage;

A répresentes les groupements terminaux de la polymérisation, apportés par l'armorceur.

Les longueurs des chaînes sont telles que l'on obtienne des oligomères liquides ou à viscosité relativement basse et présentant une bonne solubilité dans les diluants classiques.

C'est ainsi que:

$x + y + z + t + u \leq 100$

z, t, u étant tous trois $\leq 20$, ce qui permet de conserver les propriétés de souplesse dues à x, d'adhésion dues à z et de vitesse de réticulation dues à t.

Il faut noter que la présence de Z est liée à l'utilisation de copolymères commerciaux renfermant ce radical, mais ne doit pas nuire aux propriétés de souplesse du matériau.

A titre de mode d'éxécution de l'invention, le monomère diénique polymérisé (Xi), peut être choisi parmi les composés suivants:

les polybutadiènes à fonctions amines terminales

les copolymères butadiène/acrylonitrile carboxytéléchéliques

les copolymères butadiène/acrylonitrile à groupements vinyles terminaux.

L'obtention des oligomères de formule I selon l'invention nécessite trois étapes:

La première étape consiste à polymériser ou copolymériser un diène Xi (avec éventuellement Zi) en présence de molécules génératrices des extrémités A.

Cette étape est facultative lorsqu'on utilise des produits commerciaux tels les polybutadiènes hydroxy téléchéliques (PBHT) ou carboxytéléchéliques (PBCT) et copolymères.

On obtient par cette étape des molécules de structure II:

$$A\left[(Xi)_x-(Yi)_{y+z+t}\quad(Zi)_u\right]A \qquad (II)$$

Le deuxième étape consiste à réaliser l'addition, par voie radicalaire ou photochimique, de thiols, pour conduire à la création d'une liaison thio-éther. Ce thiol comporte, en outre, une ou plusieurs fonctions polaires, que l'on peut laisser libres, ou qui pourront réagir dans la troisième étape. On obtient, à l'issue de cette deuxième réaction, les molécules de structure (III):

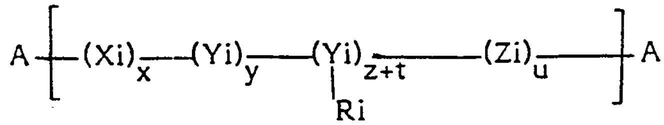

(III)

Il faut remarquer que les motifs $(Yi)_y$ correspondent aux motifs (Yi), sur lesquels l'addition du thiol n'a pas été réalisée.

La troisième étape consiste au greffage des dérivés acryliques ou méthacryliques sur les groupements Ri, par voie chimique (addition ou condensation). Le choix des composés Q découle des groupements résiduels des thiols Ri précédents.

On aboutit alors à la formule I:

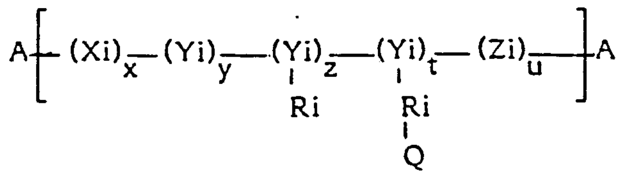

(I)

Afin de faciliter une meilleure compréhension de l'invention, les diverses étapes ci-avant vont maintenant être décrites de façon détaillée.

Première étape: Quand le diène est choisi parmi les polybutadiènes téléchéliques, obtenus par voie radicalaire on ionique, on trouve des groupements variés en extrémités de chaîne, mais les principaux commercialisés sont les diols et les diacides.

Il faut rappeler que cette première étape ne constitue pas l'originalité de l'invention.

A l'issue de cette étape, il est indispensable d'obtenir des oligomères liquides, à taux relativement élévé d'enchaînements 1—2. Un pourcentage de 20 à 30% paraît un bon compris et on l'obtiendra souvent par la polymérisation radicalaire. Il existe aussi des polybutadiènes téléchéliques avec des taux d'enchaînement de 90% commercialisés notamment sous l'appelation NISSO C 1000 par NIPPON SODA et de 58% commercialisés sous l'appellation NISSEKI B 1000 par NIPPON PETROCH.

Deuxième étape: L'addition de thiols sur les polymères du butadiène ou de l'isoprène, ou leurs copolymères, peut se faire par des méthodes radicalaires et photochimiques.

Par contre, peu de chercheurs se sont intéressés à la modification de polybutadiènes, téléchéliques par ce type de méthode. Cependant, PASCAULT et Coll. étudient depuis longtemps la synthèse, transformation et caractérisation des oligomères diéniques. (CAMBERLIN Y. European Polymer Journal (16) 1031—1036 (1980); DE LA CAMPA JG. Makromol. Chem. (182) 1415—1428 (1981); LALEG M. European Polymer Journal (18) 821—829 (1982). Ils ont plus particulièrement envisagé l'addition de divers types de thiols:

Acide thio propionique
n-butyl mercaptan
Diméthyl-2,2- propane thiol
Méthyl-4 Thiophénol

Selon l'invention, on additionne sur ces supports diéniques trois grands types de thiols:

l'acide thioglycolique
le 2 mercapto éthanol
le 2 mercapto éthanol amine.

On peut également utiliser toutes les molécules possèdant un groupement thiol ou disulfure, et dans le chaîne ou en extrémité, des groupements amine, alcool, acide.

On peut citer entre autres: l'acide thiopropionique, l'acide thiomalique, la cystéine.

Sur un polybutadiène carboxytéléchélique possèdant 20% de groupements insaturés 1—2, analysé par

résonnance magnétique nucléaire du proton, les inventeurs ont additionné l'acide thioglycolique en jouant sur le rapport

$$\frac{[\text{Thiol}]}{[\text{dl } 1\text{—}2]},$$

afin de réguler le taux d'addition. Les réactions ont en lieu dans le tetrahydrofuranne à 70° en utilisant l'azobisisobutyronitrile comme amorceur ou par amorçage photochimique aux UV avec la benzophénone.

On constate que pour obtenir un taux d'addition de 50% il faut un rapport voisin de 1, alors qu'un rapport de 2 conduit à 90% d'addition. La RMN du proton permet de mesurer ce taux d'addition du thiol.

Troisème étape: Compte-tenu des groupements précites amine, alcool, acide ou autre, le greffage des dérivés acryliques ou méthacryliques est réalisé par condensation, soit avec l'acide acrylique ou méthacrylique, soit avec l'acrylate de glycidyle ou méthacrylate de glycidyle, soit avec l'acrylate ou méthacrylate d'aziridinyle; ces réactions sont les suivantes:

Thiol amine avec méthacrylate de glycidyle

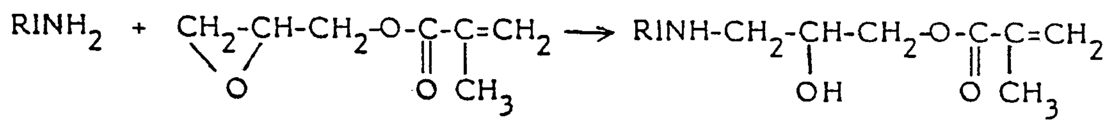

Thiol alcool avec acide méthacrylique

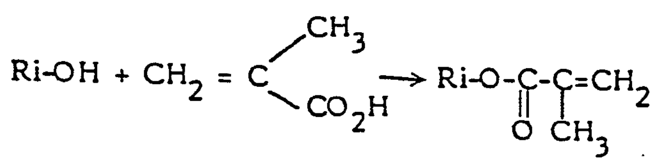

Thiol acide avec méthacrylate de glycidyle

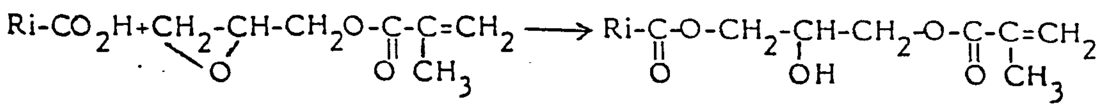

Thiol acide avec méthacrylate d'aziridinyle

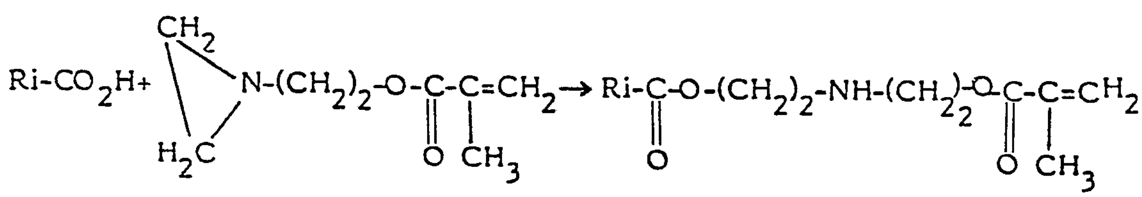

Parmi les greffons utilisés, on peut citer:

lorsque le thiol possède une ou plusieurs fonctions résiduelles acide: les acrylates, méthacrylates, cinnamate, cinnamylidène, furylacrylate, allylate de glycidyle, l'éther allylique et glycidyque, l'acrylate et le méthacrylate 2-(1-aziridinyl)éthyle, l'acrylate et le méthacrylate 3-(1-aziridinyl)hexyle, l'acrylate et le méthacrylate-4-(1-aziridinyl)butyle, l'acrylate et le méthacrylate 6-(1-aziridinyl)hexyle, l'acrylate et le méthacrylate 8-(1-aziridinyl)octyle.

lorsque le thiol possède une ou plusieurs fonctions amine: l'acrylate ou le méthacrylate de glycidyle, l'allylate de glycidyle, les cinnamate, cinnamylidène, furylacrylate de glycidyle.

lorsque le thiol possède une ou plusieurs fonctions alcool: les acides acryliques, méthacrylique, cinnamique, cinnamylidique, furylacrylique.

La méthode de greffage la plus utilisée consiste à additionner les dérivés époxy acryliques sur les polybutadiènes modifiés par l'acide thioglycolique, en présence de catalyseurs type amine tertiaire.

Cette réaction s'effectue à l'aide d'un catalyseur, la N,N diméthyl laurylamine à 60°C, dans le tétrahydrofuranne et en verrerie inactinique. La température relativement basse évite toute réticulation précoce entre les greffons mais permet néanmoins d'atteindre des vitesses de greffage assez importantes.

La réaction époxy-acide est la plus économique et, d'autre part, présente des avantages de synthèse par rapport à l'esterification directe, car elle est plus rapide et peut être facilement suivie par chromatographie par perméation de gel.

La présente invention a également pour objet les applications de ces oligomères à greffons photoréticulables dans les domaines de revêtement et protection des métaux et plastiques, papier, encres adhésifs, ainsi que comme agents de réticulation de différents vernis ou de matrices polymériques

(odontologie, composites . . .) et comme tampons encreurs souples.

La présente invention sera mieux comprise à l'aide des exemples suivants.

Exemple 1: Addition radicalaire de l'acide thioglycolique sur le polybutadiène carboxy téléchélique 2000 × 162 CTB HYCAR (dénomination commerciale)

Caractéristiques du polybutadiène de départ:

Le polybutadiène HYCAR 2000 × 162 CTB est un oligomère comportant un taux d'insaturation 1—2 de 20% et un taux d'insaturation 1—4 cis et trans de 80%. Ces caractéristiques sont vérifées par résonnance magnétique nucléaire du proton.

La masse moyenne en nombre ($\overline{Mn}$) est de 4400, ce qui correspond à un enchaînement d'environ 80 unités.

Le mélange réactionnel est préparé dans une fiole jaugée de 250 ml dans laquelle on introduit successivement 50 g de polybutadiène carboxytéléchélique 2000 × 162, soit 0,0114 mole, qui correspondent à 0,18 équivalent double-liaison 1—2, 20 g d'acide thioglycolique soit 0,2 mole; la rapport thiol sur double liaison 1—2 est donc voisin de 1.

Le volume est ensuite ajusté exactement à 250 ml par le tétrahydrofuranne. Le mélange est homogénéise au Turbula puis introduit dans un ballon à trois tubulures de 500 ml, équipé d'un réfrigérant, d'un thermométre et d'un système permettant un barbotage d'azote et porté à 70°C tout en désoxygénant la solution. Une fois la température atteinte, on introduit dans le milieu 0,33 g d'AIBN (Azobisisobutyronitrile) soit $2 \times 10^{-3}$ mole.

Après quatre heures de réaction, la mélange réactionnel est évaporé au Rotavapor à 140°C pendant une heure, afin d'éliminer le solvant et l'acide thioglycique résiduel.

La consommation en acide thiogycolique a été mesurée par chromatographie par perméation de gel, grâce à des prélévements effectués au cours de la réaction.

Le taux d'addition est apprécié de manière qualitative par la résonnance magnétique nucléaire du Carbone 13 et quantitativement par la RMN du proton.

RMN du $^{13}C$: Un spectre du polybutadiène de départ permet de differencier les carbones des insaturations 1—2 à 114,2 et 142,6 ppm, des carbones 1—4 cis et trans compris entre 128,3 et 131,6 ppm.

Le spectre du produit d'arrivée montre une diminution importante de l'intensité des deux bandes dues aux insaturations 1—2, le massif insaturations 1—4 restant inchangé. On note aussi l'augmentation d'intensité d'un pic à 177 ppm, correspondant aux carbones porteurs de fonctions acides.

RMN du $^{1}H$: Le spectre montre tout d'abord la diminution des protons des groupements vinyliques $—CH=CH_2$ par rapport au polybutadiène de départ. La méthode est la même et il suffit de comparer les intégrations à 4,8—5 et 5,2—5,7 ppm.

Le rapport initial de 20% d'insaturation 1—2 deviant égal à 9%.

De plus, on observe l'apparition d'un singulet à 3,2 ppm qui correspond au $CH_2$ de l'acide thioglycolique. Ce signal singulet montre bien qu'il s'agit d'un groupement additionné car dans le thiol libre, il apparaît sous forme d'un doublet du au couplage à travers le S. L'intégration par rapport à l'ensemble confirme le taux d'addition précédemment donné qui correspond à un taux d'addition du thiol sur les insaturations 1—2 de 50% et à un composé de formule IV:

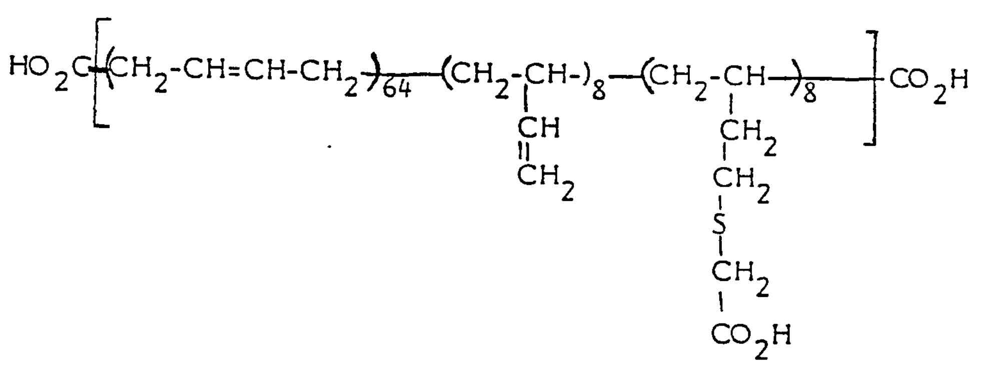

(IV)

Exemple 2: Addition photochimique de l'acide thioglycolique sur le polybutadiène 2000 × 162 CTB HYCAR.\R.

On a utilisé dans cet exemple le polybutadiène ayant les mêmes caractéristiques que dans l'exemple 1.

Le mélange réactionnel est préparé dans un tube de quartz de 50 ml, dans lequel on a introduit successivement: 11 g de polybutadiène soit $2,5 \times 10^{-3}$ mole donc 0,04 équivalent double liaison 1—2, 4,5 g d'acide thioglycolique soit 0,04 mole. Le rapport thiol, insaturations 1—2 est voisin de 1; 0,015 g de benzophénone soit $8 \times 10^{-5}$ mole. On ajoute une quantité de dichlorométhane suffisante pour avoir, après agitation, une solution homogène (environ 25 ml); on adapte au soummet du tube un système permettant la barbotage d'azote, le mélange étant agité magnétiquement pendant le réaction. Le tube est exposé une heure au rayonnement UV d'une lampe Philips de 125 W, l'ensemble étant refroidi par un jet continu d'air comprimé.

Après évaporation à 140°C au Rotovapor afin d'éliminer le solvant et le thiol résiduel, on effectue l'analyse du produit d'arrivée.

Le spectre RMN du proton, effectué dans des conditions identiques à celles de l'exemple 1, a permis de déterminer un taux d'addition sur les doubles liaisons 1-2 égal à 50%; on obtient donc des composés de même structure IV que dans l'exemple 1.

Exemple 3: Addition radicalaire de l'acide thioglycolique sur le polybutadiène 2000 × 165 CTB d'HYCAR.

Caractéristique du polybutadiène de départ:

La polybutadiène 2000 × 165 CTB est un oligomère comportant un taux d'insaturation moyen 1—2 de 20% et 1—4 cis et trans de 80%. La masse moyenne en nombre est de 4000, ce qui correspond à un enchaînement d'environ 72 unités.

Le mélange reactionnel est préparé dans une fiole jaugée de 250 ml, dans laquelle on introduit successivement 50 g de polybutadiène 2000 × 165 CTB soit 0,0125 mole donc 0,19 équivalent double-liaison 1—2, 27 g d'acide thioglycolique soit 0,28 mole. Le rapport thiol, double-liaison 1—2 est voisin de 1,5.

La volume est ensuite ajusté à 250 ml par le tétrahydrofuranne, agité au Turbula afin d'être homogénéisé et introduit dans un ballon à trois tubulures identiques au protocole expérimental de l'exemple 1.

Lorsque la température de 70°C est atteinte, on ajoute, dans le milieu, 0.27 g d'azobisisobutyronitrile, soit $1,6 \times 10^{-3}$ mole. Après huit heures de réaction, le mélange est purifié par évaporation du solvant au Rotavapor puis à la pompe à palette 2 h 30, $5.10^{-2}$ mm de mercure, à 60°C. L'analyse du spectre RMN du proton, effectuée dans des conditions identiques au cas No 1 et 2, a permis de déterminer un taux d'addition, sur les insaturations 1—2, égal à 50%. La structure du composé obtenu correspond à la formule V ci-après:

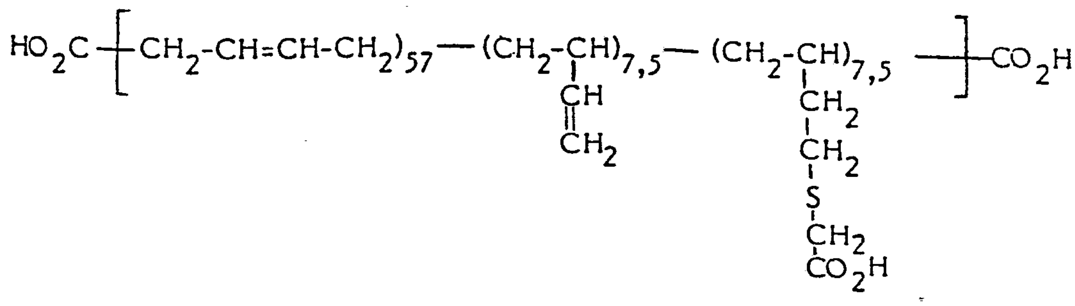

(V)

Exemple 4: Addition radicalaire de l'acide thioglycolique sur le polybutadiène 2000 × 165 CTB HYCAR.

On s'est efforçé dans cet exemple d'obtenir un taux d'addition voisin de 100%.

Pour obtenir ce résultat, le rapport thiol sur taux d'insaturation 1-2 du polybutadiène, a été modifié.

Ce rapport a été pris égal à 2, c'est-à-dire toutes autres conditions expérimentales inchangées par rapport à l'exemple 1:

50 g de polybutadiène 2000 × 165 CTB, soit 0,18 équivalent double-liaison;

33 g d'cide thioglycolique soit 0,36 mole;

0,6 g d'azobisisobutyronitrile soit $0,36 \times 10^{-2}$ mole.

La réaction est conduite dans le tétrahydrofuranne à 70°C pendant quatre heures. Le suivi par chromatographie par perméation de gel montre une dispersion quasi totale du thiol; la RMN du carbone 13 permet d'apprécier aussi la très forte diminution des pics dus aux C 1—2 à 114,2 et 142,6 ppm et la RMN du proton confirme, en utilisant la même technique que dans les autres exemples, un taux d'addition de l'acide thioglycolique sur les doubles-liaisons voisin de 90%. La structure du produit est VI:

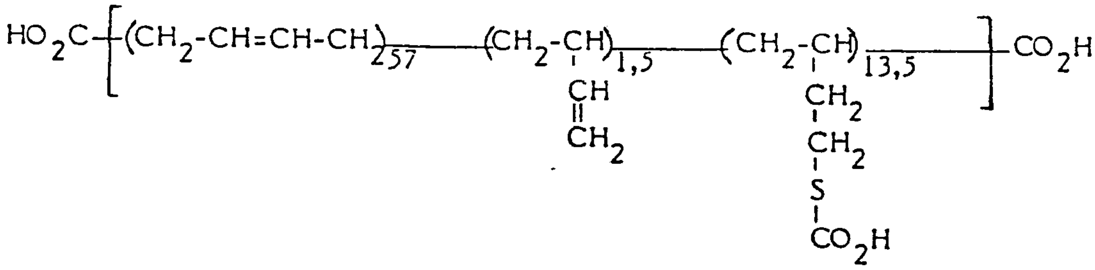

(VI)

Exemple 5: Addition radicalaire de 2-mercapto éthanol sur le polybutadiène hydroxy téléchélique R45 d'ARCO (ARCO Chemical Co).

Caractéristiques du produit de départ:

Le polybutadiène HT R45 est un oligomère comportant un taux d'insaturations 1—2 de 20% et 1—4 cis et trans de 80%, vérifiées par RMN du proton.

La masse moyenne en nombre est de 2800, ce qui correspond à un enchînement d'environ cinquante unités.

Comme dans l'exemple 4, un taux d'addition de 100% a été recherché. Les conditions opératoires sont les suivantes:

50 g de polybutadiène HT R 45 soit 0,018 mole et 0,18 équivalent double liaison 1—2.

28 g de 2-mercapto éthanol soit 0,36 mole. La rapport thiol sur double liaison 1—2 est égal à 2.

0,6 g d'azobisisobutyronitrile soit $3,6 \times 10^{-3}$ mole.

La réaction dans le tétrahydrofuranne est conduite à 70°C pendant quatre heures; comme précédemment, c'est l'analyse du spectre RMN du proton qui permet de confirmer le taux d'addition.

Le polybutadiene hydroxytéléchélique présente comme le carboxytéléchélique les pics à 4,8—5 ppm (insaturations 1—2), entre 5,2 et 5,7 ppm (insaturations cis et trans 1—4), à 2 ppm les protons allyliques et entre 1,2 et 1,4 ppm les protons des $CH_2$ saturés de la chaîne. On observe, en plus, vers 4 ppm les protons des $CH_2$—OH allyliques et vers 3,5 ppm les protons des $CH_2OH$ non allyliques.

Le 2-mercapto éthanol, quant à lui, se présente sous la forme d'un triplet à 3,7 et d'un triplet rédoublé à 2,7 suite au couplage avec le proton du SH.

Lorsqu'on fixe le thiol sur le polybutadiène, on observe la superposition des deux spectres précédents, en ce qui concerne les $CH_2OH$.

Seul le $CH_2$ en α du S, à 2,7 ppm passe sous forme d'un triplet peu modifié en déplacement chimique.

Cette étude RMN du proton permet de calculer un taux d'addition du thiol alcool sur les doubles liaisons 1—2 de 90%, ce qui donne la structure VII:

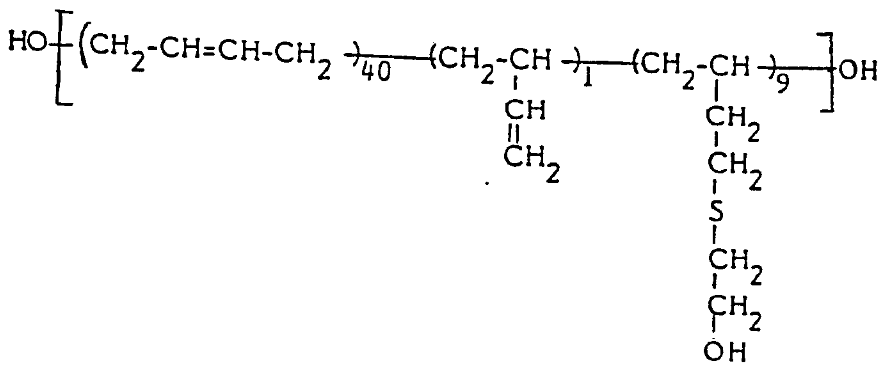

(VII)

Exemple 6: Greffage à 50% du méthacrylate de glycidyle sur le produit IV.

D'un manière générale, ces réactions ont été effectuées dans un ballon inactinique de un litre, surmonté d'un réfrigérant, et plongé dans un bain d'huile régulé à 60°C.

On introduit dans le ballon:

50 g de produit IV soit $10^{-2}$ mole donc $8 \times 10^{-2}$ équivalent acide,

5,7 g de méthacrylate de glycidyle soit $4 \times 10^{-2}$ mole

1,36 g de N,N diméthyl lauryl amine soit $6 \times 10^{-3}$ mole hydroquinone en quantité catalytique

500 ml de tétrahydrofuranne.

Le mélange est homogénéisé au Turbula avant de commencer la chauffe et la réaction se déroule pendant 24 heures, puis le solvant est évaporé au Rotovapor puis à la pompe à palette ($5 \times 10^{-2}$ mm de mercure) à une température inférieure à 50°C.

Des prélévements effectués en cours de réaction permettent de suivre chromatographie par perméation de gel le greffage du méthacrylate de glycidyle.

Le produit est ensuite analysé par RMN du proton. En effet, la présence des groupements méthacryliques est vérifiée par les pics à 5,6 et 6,1 ppm correspondant aux deux protons de la double liaison méthacrylique, et, d'autre part, par le groupement époxyde:

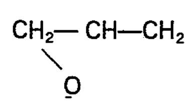

qui donne trois massifs entre 4 et 4,2 ppm (2 H), à 3,2 ppm (1H) et entre 2,5 et 3 ppm (2 H). La comparaison des intégrations des protons du pic à 4,2 ppm et du pic à 3,2 ppm de l'acide thioglycolique greffé et non

greffé permet d'évaluer le taux de greffage du méthacrylate de glycidyle sur les groupes acides pendants.

Dans le cas présent, le taux de greffage obtenu est de 50%, ce qui donne la structure VIII:

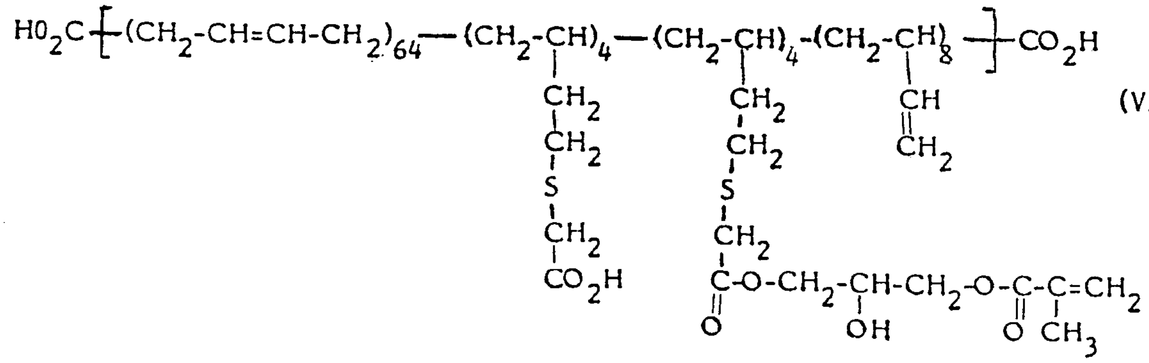

(VIII)

Exemple 7: Greffage à 100% de méthacrylate de glycidyle sur le produit IV.

On introduit dans le ballon inactinique:

50 g de produit IV soit $10^{-2}$ mole donc $8 \times 10^{-2}$ équivalent acide

11,5 de méthacrylate de glycidyle soit $8 \times 10^{-2}$ mole

1,36 g de N,N diméthyllauryl amine soit $6 \times 10^{-3}$ mole hydroquinone en quantité catalytique

500 ml de tétrahydrofuranne.

Aprés homogénéisation du mélange au Turbula, on suit le protocole identique à l'exemple 6.

Le spectre RMN du proton nous donne dans ce cas un taux de greffage voisin de 90% et le composé répond à la formule IX:

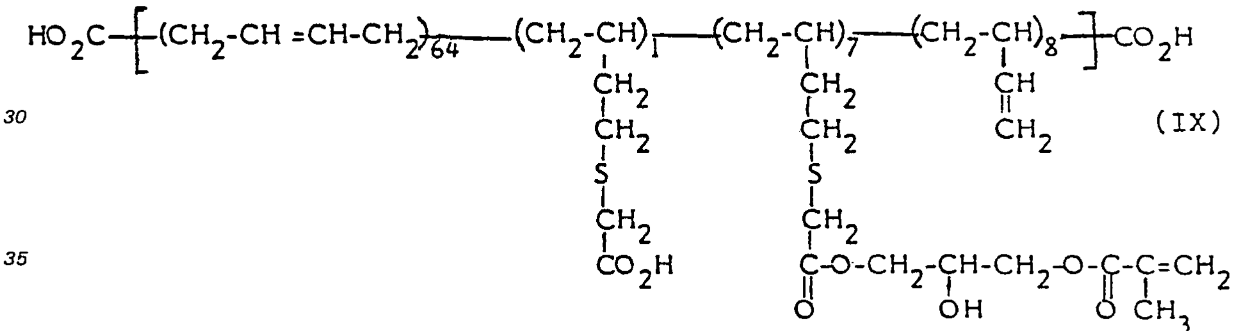

(IX)

Exemple 8: Greffage à 50% de l'acide méthacrylique sur le produit VII.

Cette réaction est un ésterification menée dans un solvant capable in produire un azéotrope avec l'eau.

Dans un ballon inactinique de 1 litre muni d'un système de distillation azéotropique, on introduit successivement: 50 g de produit VII, soit 0,014 mole donc 0,13 équivalent alcool; 11 g d'acide méthacrylique soit 0,13 mole, 0,25 g d'acide paratoluène sulfonique soit $0,13 \times 10^{-2}$ mole; hydroquinone en quantité catalytique; 250 ml de dichlorométhane.

Après 24 heures de réaction à 40°C, on évapore le solvant et l'acide méthacrylique résiduel au Rotavapor et à la pompe à palette ($5 \times 10^{-2}$ mm de mercure) à 40°C. L'évolution du taux de greffage au cours de la réaction est suivie par l'analyse de prélèvements grâce à la chromatographie par perméation de gel.

Le taux de greffage final est également calculé par RMN du proton et par chromatographie par perméation de gel.

Après 24 heures, on obtient un taux de greffage de 50% pour un composé de structure X:

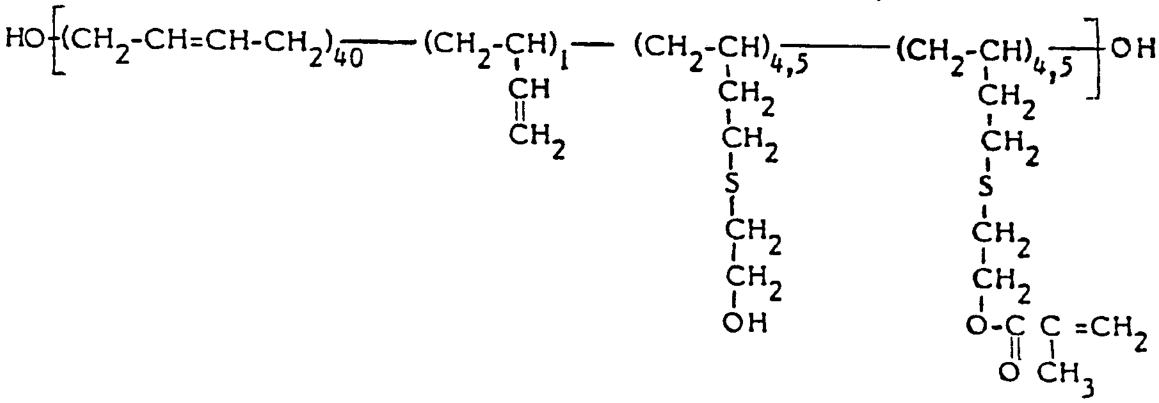

(X)

Exemple 9: Application à la protection des métaux.

La présente invention est également relative à l'application des oligomères revendiqués dans les exemples 6, 7 et 8 ainsi qu'à tout autre oligomère issu de l'étape 3 du procédé, et plus particulièrement, a leur utilisation dans le domaine de la protection des métaux tels que l'aluminium et ses alliages. On a vu plus haut que le greffage des fonctions acryliques portrait sur une fraction plus ou moins importante des fonctions résiduelles du thiol, additionné sur les insaturations 1—2 des oligomères polydièniques, de sorte qu'il reste des fonctions acides, alcools ou amines libres.

Ces fonctions ont des propriétés d'adherence sur divers substrats.

Il est donc préférable d'utiliser des taux de greffage limités à 50%.

De plus, les séquences d'insaturations 1—4 confèrent à l'ensemble des propriétés de souplesse.

Une formulation type utilisée comporte:

Oligomère VIII: 55 parties en poids

Méthacrylate d'éthylène glycol: 45 parties en poids

Photoinitiateur DAROCUR 1173 dénomination commerciale), dérivé de l'acétophénone de formule:

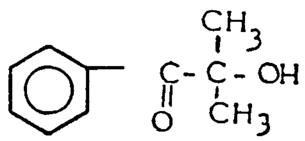

2 parties en poids.

L'application sur plaque d'aluminium de référence 8011 a été effectuée avec la tige filtée d'un système applicateur, afin d'obtenir une épaisseur de 10 µm. Celle-ci est mesurée par une jauge d'épaisseur magnétique Permascope.

Après application du vernis, les plaques sont déposées sur le tapis d'un appareil à irradier, muni de deux lampes Philips HPM—15 de 80 watts par centimètre. La vitesse de défilement du tapis est réglée de façon à obtenir, après irradiation, des plaques sèches au toucher: soit une vitesse de 15 m/mm.

Afin de déterminer les qualités du vernis, une série de tests est effectuée sur les plaques ainsi préparées, dont les résultats sont portés sur la tableau ci-après:

| Test | Appréciation |
|---|---|
| Etalement | bon |
| Tenue au solvant<br>méthyléthylcétone<br>nombre d'aller-retour | >100 |
| Quadrillage<br>Norme DIN 531—51 | 5/5 |
| Arrachement au scotch<br>aprés quadrillage | 5/5 |
| Tenue au choc en joule<br>AFNOR T 30039 | trés bon jusqu'à 0,5 |
| Tenue à l'eau<br>8 jours à 37°C | 4/5 |
| Adhérence par quadrillage<br>+ scotch après immersion<br>dans l'eau à 37°C/8 jours | 3/5 |

Il faut noter qu'on n'a pas pu, faute d'appareillage, contrôler la tenue au choc pour des valeurs supérieures à 0,5 joule, mais pour cette valeur on n'a noté aucun décollement du vernis.

**Revendications**

1. Oligomères à séquences polydiéniques et à greffons photoréticulables, caractérisés en ce qu'ils contiennent une séquence polydiénique de 1 à 100 maillons isoprène, ou butadiène, ou chloroprène, des groupements fonctionnels polaires tels que les groupements acides ou alcools, au nombre de 1 à 20, les groupements acryliques ou méthacryliques au nombre de 1 à 20, les trois de groupement étant liés par des liaisons covalentes, et en ce qu'ils présentent la formule générale:

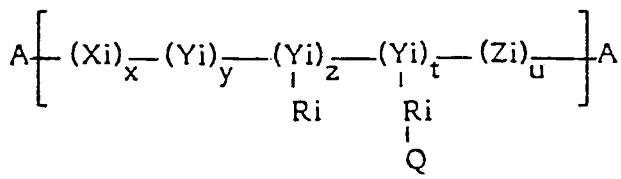

(I)

dans laquelle:

Xi représente un monomére diènique polymérisé suivant un enchaînement 1—4, cis ou trans, tel que l'isoprène, le butadiène ou le chloroprène;

Yi représente un monomére diènique polymérisé suivant un enchaînement 1—2 ou 3—4, tel que l'isoprène, le butadiène ou le chloroprène;

Zi représente un monomére polymérisable non diènique, acrylique, vinylique ou allylique;

Ri représente un groupement thiol additionné sur la double liaison non polymérisée du diène Yi et possédant en outre, sur sa chaîne, un ou plusieurs groupements sur lesquels on peut greffer des acryliques ou méthacryliques Q;

Q représente un dérivé acrylique ou méthacrylique, acide ou ester, comportant une fonction complémentaire à celle du groupement Ri;

A répresente les groupements terminaux de la polymérisation, apportés par l'armorceur,

et $x + y + z + t + u \leq 100$

z, t, et u étant tout trois $\leq 20$

2. Oligomères selon la revendication 1, caractérisés en ce que on part d'une structure dienique ayant la structure:

$$A—(Xi_x)—(Yi)_{y+z+t}(Zi)_u—A$$

sur laquelle est additionnée, principalement sur les liaisons 1—2 ou 3—4 un thiol Ri, par voie radicalaire ou par UV, Ri possédant plusieurs sites sur lesquels on peut greffer le dérivé insaturé Q.

3. Oligomères selon la revendication 1, caractérisés en ce que la structure diénique de départ est un polybutadiène hydroxytéléchélique d'enchainement 1—4 et 1—2.

4. Oligomères selon la revendication 1, caractérisés en ce que la structure diénique de départ est un polybutadiène carboxytéléchélique.

5. Oligomères selon l'une des revendications 1 à 4, caractérisés en ce que thiol Ri est choisi dans le groupe comprenant le 2-mercaptoéthanol, l'acide thioglycolique, le 2-mercaptoéthanol amine.

6. Oligomères selon l'une des revendications 1 à 5, caractérisés en ce que le dérivé Q acrylique ou méthacrylique est choisi parmi le groupe d'acides constitué par les acides acryliques, méthacrylique.

7. Oligomères selon l'une des revendications 1 à 6, caractérisés en ce que le dérivé Q acrylique ou méthacrylique est choisi parmi le groupe des acrylates constitué par l'acrylate de glycidyle, le méthacrylate de glycidyle, le méthacrylate de 2 (1 aziridinyl) éthyle.

8. Oligomères selon l'une des revendications 1 à 7, caractérisés en ce que le monomère diénique polymérisé (Xi) est un polybutadiène à fonctions amines terminales.

9. Oligomères selon l'une des revendications 1 à 7, caractérisés en ce que le monomère diénique (Xi) polymérisé est un copolymère butadiene/acylonitrile carboxytéléchélique.

10. Oligomères selon l'une des revendications 1 à 7, caractérisés en ce que le monomère diénique (Xi) polymérisé est un copolymère butadiène/acrylonitrile à groupements vinyles terminaux.

11. Application des oligomères selon l'une quelconque des revendications 1 à 7 à la protection des surfaces métalliques.

12. Application des oligomères selon l'une quelconque des revendications 1 à 7 à la fabrication des tampons encreurs.

**Patentansprüche**

1. Oligomere mit einer Polydien-Sequenz und mit photovernetzbaren Pfropfen, dadurch gekennzeichnet, daß sie eine Polydien-Sequenz von 1 bis 100 Isopropen-, oder Butadien-, oder Chloropren-Einheiten enthalten, und Gruppen mit polaren Funktionen, wie 1-20 Säureoder Alkaholgruppen, 1 bis 20

Acryl- oder Methacrylgruppen, wobei die 3 Gruppenarten durch kovalente Bindungen gebunden sind, und dadurch, daß sie die allgemeine Formel besitzen:

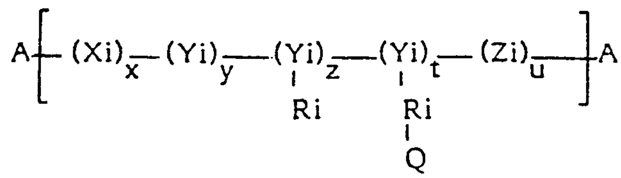

(I)

worin bedeuten:

Xi ein durch cis- oder trans- 1—4-Verkettung polymerisiertes Dienmonomer, wie Isopren, Butadien oder Chloropren;

Yi ein durch 1—2- oder 3—4-Verkettung polymerisiertes Dienmonomer, wie Isopren, Butadien oder Chloropren;

Zi ein keine Dienstruktur aufweisendes polymerisierbares Acryl-, Vinyl- oder Allylmonomer;

Ri eine an die nichtpolymerisierte Doppelbindung des Diens Yi addierte Thiolgruppe, die außerdem in ihrer Kette eine oder mehrere Gruppen enthält, auf die man Acryl- oder Methacryl-Gruppen Q aufpfropfen kann;

Q ein Acryl- oder Methacrylsäure oder -ester-Derivat, daß eine zu der Funktion der Gruppe Ri komplementäre Funktion trägt;

A die durch das Startmolekül eingebrachten Polymerisationsendgruppen darstellt; und

$x + y + z + t + u \leq 100$ sind, und

z, t, und u alle drei $\leq 20$ sind.

2. Oligomere nach Anspruch 1, dadurch gekennzeichnet, daß man von einer Dienstruktur der Formel ausgeht:

$$A—(Xi_x)—(Yi)_{y+z+t}(Zi)_u—A$$

auf die, hauptsächlich7 über die 1—2- oder 3—4-Bindungen, ein Thiol Ri auf radikalischen Weg oder durch UV addiert ist, und wobei Ri mehrere Stellen, besitzt, auf die man das ungesättigte Derivat Q aufpfropfen kann.

3. Oligomere nach Anspruch 1, dadurch gekennzeichnet, daß die Dien-Ausgangsstruktur ein Hydroxytelechelisches Polybutadien mit 1—4- und 1-2-Verkettung ist.

4. Oligomere nach Anspruch 1, dadurch gekennzeichnet, daß die Dien-Ausgangsstruktur ein Carboxy-telechelisches Polybutadien ist.

5. Oligomere nach einem der Ansprüche 1 bis 4, dadurch gekennzeichnet, daß das Thiol Ri ausgewählt ist aus der Gruppe bestehend aus 2-Mercaptoethanol, Thioglycolsäure, 2-Mercaptoethanolamin.

6. Oligomere nach einem der Ansprüche 1 bis 5, dadurch gekennzeichnet, daß das Acryl- oder Methacrylderivat Q ausgewählt ist aus der Gruppe der Säuren bestehend aus Acrylsäure und Methacrylsäure.

7. Oligomere nach einem der Ansprüche 1 bis 6, dadurch gekennzeichnet, daß das Acryl- oder Methacrylderivat Q ausgewählt ist aus der Gruppe der Acrylate bestehend aus Glycidylacrylat, Glycidylmethacrylat, 2-(1-Aziridinyl)-ethylmethacrylat.

8. Oligomere nach einem der Ansprüche 1 bis 7, dadurch gekennzeichnet, daß das polymerisierte Dienmonomere (Xi) ein Polybutadien mit terminalen Aminfunktionen ist.

9. Oligomere nach einem der Ansprüche 1 bis 7, dadurch gekennzeichnet, daß das polymerisierte Dienmonomere (Xi) ein Carboxy-telechelisches Butadien/Acrylnitril-Copolymeres ist.

10. Oligomere nach einem der Ansprüche 1 bis 7, dadurch gekennzeichnet, daß das polymerisierte Dienmonomere (Xi) ein Butadien/Acrylnitril-Copolymeres mit terminalen Vinylgruppen ist.

11. Verwendung der Oligomere nach einem der Ansprüche 1 bis 7 zum Schutz von metallischen Oberflächen.

12. Verwendung der Oligomere nach einem der Ansprüche 1 bis 7 zur Herstellung von Stempelkissen.

## Claims

1. Oligomers containing polydiene blocks and photocrosslinkable grafts, characterized in that they contain a polydiene block of 1 to 100 isoprene or butadiene or chloroprene chain links, polar functional groups such as acidic or alcohol groups, from 1 to 20 in number, acrylic or methacrylic groups from 1 to 20

in number, the three types of group being linked by covalent bonds, and in that they have the general formula

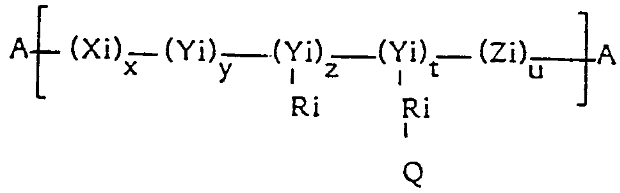

(I)

in which:

Xi denotes a diene monomer polymerised according to a cis or trans, 1,4 chain structure, such as isoprene, butadiene or chloroprene;

Yi denotes a diene monomer polymerized according to a 1,2 or 3,4 chain structure, such as isoprene, butadiene or chloroprene;

Zi denotes a nondiene, acrylic, vinyl or allyl polymerizable monomer;

Ri denotes a thiol group added to the unpolymerized double bond of the diene Yi and additionally/ having, on its chain, one or more groups onto which acrylics or methacrylics Q can be grafted;

Q denotes an acrylic or methacrylic derivative, acid or ester, containing a functional group complementary to that of the group Ri;

A denotes the end groups of the polymerization, which are contributed by the initiator, and

$x + y + z + t + u \leq 100$

z, t, and u being all three $\leq 20$.

2. Oligomers according to Claim 1, characterized in that the starting point is a diene structure which has the structure

$$A—(Xi_x)—(Yi)_{y+z+t}(Zi)_u—A$$

to which a thiol Ri is added by a radical route or using UV, chiefly to the 1,2 or 3,4 bonds, Ri having a number of sites onto which the unsaturated derivative Q can be grafted.

3. Oligomers according to Claim 1, characterized in that the starting diene structure is a hydroxytelechelic polybutadiene of 1,4 and 1,2 chain structure.

4. Oligomers according to Claim 1, characterized in that the starting diene structure is a carboxytelechelic polybutadiene.

5. Oligomers according to one of Claims 1 to 4, characterized in that the thiol Ri is chosen from the group comprising 2-mercaptoethanol, thioglycolic acid and 2-mercaptoethanolamine.

6. Oligomers according to one of Claims 1 to 5, characterized in that the acrylic or methacrylic derivative Q is chosen from the group of acids consisting of acrylic and methacrylic acids.

7. Oligomers according to one of Claims 1 to 6, characterized in that the acrylic or methacrylic derivative Q is chosen from the group of acrylates consisting of glycidyl acrylate, glycidyl methacrylate and 2-(1-aziridinyl)ethyl methacrylate.

8. Oligomers according to one of Claims 1 to 7, characterized in that the polymerized diene monomer (Xi) is a polybutadiene containing end amine functional groups.

9. Oligomers according to one of Claims 1 to 7, characterized in that the polymerized diene monomer (Xi) is a carboxytelechelic butadiene/acrylonitrile copolymer.

10. Oligomers according to one of Claims 1 to 7, characterized in that the polymerized diene monomer (Xi) is a butadiene/acrylonitrile copolymer containing end vinyl groups.

11. Application of the oligomers according to any one of Claims 1 to 7 to the protection of metal surfaces.

12. Application of the oligomers according to any one of Claims 1 to 7 to the manufacture of inking pads.